# EUROPEAN PATENT APPLICATION

(11) **EP 4 848 496 A1**
(43) Date of publication of application: **02.12.2026**
(21) Application number: 26181347.1
(22) Date of filing: 27.05.2026
(51) Int. Cl.: H01R 43/048, H01R 4/18, H01R 43/02, B23K 1/002

(54) **DEVICE AND METHOD FOR SOLIDIFYING A CRIMP CONNECTION AS WELL AS FULLY AUTOMATIC WIRE PROCESSING MACHINE**

(30) Priority: 28.05.2025 DE 102025120998
(71) Applicant: TE Connectivity Solutions GmbH, 8200 Schaffhausen (CH)
(72) Inventor: BLUEMMEL, Uwe, 8200 Schaffhausen (CH); BLUMENSCHEIN, Rudi, 8200 Schaffhausen (CH); BRABETZ, Florian, 8200 Schaffhausen (CH); VAN SEBROECK, Bart, 8200 Schaffhausen (CH)
(74) Representative: Grünecker Patent- und Rechtsanwälte PartG mbB

(57) **Abstract**

The present invention relates to a device (1) for solidifying a crimp connection (8) between a stamped and bent contact (6) and an electrical conductor strand (4), one or both of which are tin-plated, wherein the device (1) has a heating region (10) and an induction loop (26) delimiting the heating region (10) at least in sections, wherein the induction loop (26) has at least a first leg (28') extending along the heating region. In the heating region (10), the crimp connection (8) can be heated inductively, whereby a tin coating (18) on the crimp connection (8) at least partially melts or is fully melted. Subsequently, the crimp connection (8) can cool down so that the tin coating (18) hardens and contributes to the strength of the crimp connection (8). Further, the present invention relates to a fully automatic wire processing machine (2) including such a device (1). Moreover, the present invention relates to a method and a use.

## Description

The present invention relates to a device for solidifying a crimp connection between a stamped and bent contact and an electrical conductor strand. Furthermore, the present invention relates to a fully automatic wire processing machine equipped with such a device. Furthermore, the present invention relates to a method and the use of an induction loop for solidifying the crimp connection.

In many fields of technology, electrical conductor strands equipped with contact elements are used. The electrical conductor strands may, for example, consist of stranded wires or cable core conductors. During assembly, crimp connections provide a means of securing the contact elements to the respective electrical conductor strand.

The crimp connections are produced by largely plastic deformation of the contact elements using special crimping tools and are based on a mechanical interaction between the contact elements and the respective electrical conductor strand. In particular, a combination of form fit, friction fit, and/or cold-welded material bond is achieved within the crimp connections.

For visual enhancement and corrosion protection, the contact elements and/or electrical conductor strands are conventionally provided with a tin coating. During plastic deformation, the tin coating serves as a lubricant that improves the service life of the crimp tools. However, this lubricating effect counteracts the frictional locking within the crimp connections and may, under certain circumstances, impair the reliability of the crimp connections.

The object of the present invention is to provide means by which reliable crimp connections may be produced in a manner with reduced tool wear.

This object is addressed by the aforementioned device in that the device includes a heating region and an induction loop that delimits the heating region at least partially, wherein the induction loop includes at least a first leg that extends along the heating region.

The mode of operation and the resulting advantage of the invention are explained below:
When current flows through the induction loop, an electromagnetic field is generated, particularly around the first leg. Under the influence of this electromagnetic field, the crimp connection may be heated inductively, so that the inherently re-meltable tin coating at least partially melts or is fully melted. This allows the tin coating to redistribute itself at the crimp connection. After leaving the heating region, the crimp connection cools down again, causing the tin coating to harden and contribute to the strength of the crimp connection.

The present invention thus utilizes the tin coating to bond or solder the crimp connection in place, after previously exploiting the lubricating effect of the tin coating during the plastic deformation of the crimp connection. Furthermore, the electrical properties of the crimp connection are improved, as the melted tin coating may penetrate fine gaps and crevices that would otherwise not be involved in the current flow. All of this increases the reliability of the crimp connection and reduces wear on the tooling, since the tin coating does not need to be omitted.

A fully automatic wire processing machine equipped with the device according to the invention also solves the problem described at the outset. In this context, the fully automatic wire processing machine further includes a first processing station for creating the crimp connection between the stamped and bent contact and the electrical conductor strand, as well as a second processing station for finishing the stamped and bent contact and/or the electrical conductor strand. The device according to the present invention is arranged between the first processing station and the second processing station, so that the above-described solidification of the crimp connection may take place during a transfer movement between the first and second processing stations. **In** other words, solidification is possible during this movement (on-the-fly), so that no intermediate stop is required for this purpose.

Furthermore, the problem addressed at the outset is solved by a method for solidifying the crimp connection between the stamped and bent contact and the electrical conductor strand. In this method, the steps include passing the crimp connection through the inventive device, heating the crimp connection in the heating region of the device, and cooling the crimp connection outside the heating region. Thus, the crimp connection may be heated to a temperature, at which the re-meltable tin coating of the crimp connection melts or at least begins to melt. After cooling, the redistributed tin coating hardens and increases the strength of the crimp connection.

The solution according to the invention may be further improved by various embodiments, each of which is advantageous in itself and may be combined with one another as desired. These embodiments and the advantages associated therewith are discussed below. The following additional features may be applied without distinction to the device, the fully automatic wire processing machine, and the method. If a feature pertains to the method, the device and the fully automatic wire processing machine are readily configured to perform the corresponding method step. Conversely, a device component may also be part of the method.

According to a first feasible embodiment, the device may be configured to generate a spatially and/or temporally varying magnetic field in the heating region. Based on the frequency of the varying magnetic field, the energy input required for inductive heating may be precisely adjusted. **In** particular, the energy input may be precisely adapted to a transit time or dwell time available during the transfer movement between the processing stations of the fully automatic wire processing machine. Alternatively, a static magnetic field may also be used, provided this is sufficient for the purposes of inductive heating.

Optionally, the induction loop may include a second leg opposite the first leg with respect to the heating region, wherein the first leg and the second leg are electrically connected in series.

In other words, the electrically connected legs are connected in series, electrically linked in a series configuration, or arranged in a common current path, such that (alternating) current flows through the two legs in series.

Due to their opposing arrangement, the two legs are spaced apart from one another by the heating region, so that the crimp connection may be moved through the heating region between the legs. When current flows through the induction loop, which surrounds the heating region at least in sections, an electromagnetic field is generated, particularly around the two legs. Since the heating region is located between the legs and the legs are connected in series, the magnetic field lines superimpose on one another in the heating region by design, resulting in a strengthened overall field there.

Accordingly, the object set forth at the outset is also addressed by using the induction loop having the first leg and the second leg that is electrically connected in series with the first leg, to solidify the crimp connection between the stamped and bent contact and the electrical conductor strand as it is moved through the space between the legs. The use of the induction loop enables the tin coating to be used to solidify the crimp connection, rather than dispensing with it.

The magnetic field generated by the induction loop may be specifically manipulated if the device includes at least one ferrite element that surrounds the first leg and/or the second leg at least in sections. With the at least one ferrite element, the magnetic field may be focused on the heating region, thereby increasing the effectiveness and efficiency of the device. Optionally, a ferrite element may be provided for each leg.

According to a further feasible embodiment, the first leg and the second leg may each have a circular cross-section. In other words, a shape extending in the longitudinal direction of the respective legs may be cylindrical. This enables the use of comparatively inexpensive round bars or round tubes in the manufacture of the induction loop.

Alternatively, the first leg and the second leg may each have a substantially rectangular, in particular square, cross-section. Along the longitudinal direction, the legs then have a cuboid shape. At the flat sides of the respective cuboid shape facing the heating region, the field lines emerge approximately parallel to one another. Consequently, the legs may be aligned such that these field lines enter the heating region perpendicular to the direction of movement of the crimp connection. The orthogonality between the field lines and the direction of movement of the crimp connection achieved in this way increases the efficiency of the inductive heating.

According to a further feasible embodiment, a distance between the first leg and the second leg may be adjustable. For example, the distance may be continuously adjustable so that the size of the heating region may be adapted to a dimension of the crimp connection. Thus, the device, the fully automatic wire processing machine, and the method may be used for crimp connections of various configurations. Furthermore, this embodiment leads to an increase in efficiency, as the legs may be brought closer to the crimp connection, thereby minimizing unnecessary air gaps.

According to a further feasible embodiment, the fully automatic wire processing machine may be configured to process a stamped and bent contact with at least two crimp flanks. In particular, the first processing station may be configured to bring at least two crimp flanks into mutual contact. When the crimp flanks are in contact, the respective tin coatings lie directly against one another, so that they may fuse directly with one another. Advantageously, the melting and redistribution of the tin coating requires little energy and time, since partial melting is sufficient and only very short distances need to be overcome.

The at least two crimp flanks just mentioned may be located at a crimp section of the stamped and bent contact. In the crimp connection, the at least two crimp flanks may squeeze the electrical conductor strand and be cold-welded to it. In addition to the crimp section, the stamped and bent contact may have a contact section. This contact section is located opposite the electrical conductor strand with respect to the crimp connection. In other words, the contact section may protrude away from the electrical conductor strand at the crimp section. In the second processing station, the contact section may undergo a post-processing step.

Optionally, the induction loop may include a deflection piece that connects one end of the first leg to one end of the second leg. The deflection piece may extend transversely, in particular perpendicularly, to the first and second legs. For example, the deflection piece may be bent out of a common plane of the first and second legs. Such a deflection piece enables the legs to be arranged in series without obstructing the heating region. **In** particular, the deflection piece may be U-shaped, wherein an apex of the U-shape is farther away from the two legs than the length of the aforementioned contact section. Thus, the deflection piece does not obstruct movement of the stamped and bent contact, provided that its crimp section is located between the legs.

For power supply, the induction loop may include a first power connection and a second power connection. The power connections may also extend transversely, particularly perpendicular to the first and second legs. Accordingly, the power connections may also be bent out of the common plane of the first and second legs.

The first power connection and the second power connection may be opposite each other with respect to the heating region. Furthermore, the first power connection may be arranged at an end of the first leg not connected by the deflection piece, and the second power connection may be arranged at an end of the second leg not connected by the deflection piece.

The arrangement of the power connections at the non-connected ends of the legs allows the magnetic field to develop along the entire length of both legs. Additionally, the induction loop may be manufactured with fewer bends, since only one deflection piece is sufficient at the non-connected, opposite ends of the legs. Alternatively, the power connections may be located on the same side of the heating region. In this case, one of the two legs is interrupted between the power connections, and the induction loop has two deflection pieces.

Optionally, the power connections may also each form coolant connections, so that the induction loop may be fluid-cooled. As an alternative to power connections, the induction loop itself may be powered by inductive coupling.

According to a further feasible embodiment, the heating region may extend from an entry point to an exit point. The at least one ferrite element mentioned above may extend, at least in sections, between the entry point and the exit point. The entry point may be located at an entry opening or an entry gap of the induction loop. Accordingly, the exit point may be located at an exit opening or an exit gap of the induction loop. To enable the crimp connection to move through the heating region along a straight path, the entry opening and exit opening are optionally arranged at the same height.

If the amount of tin contained in the tin coating to be melted is insufficient to solidify the crimp connection, additional solder may be applied to the crimp connection before or during its passage through the heating region. After the crimp connection has cooled down and hardened, the additional solder provides improved strength.

According to a further feasible embodiment, the heating region may be curved. For this purpose, the first leg and the second leg may each have a curvature. In particular, the legs may have identically shaped curves and run symmetrically relative to one another. For example, the identically shaped curves of the legs may each represent a segment of a circle. Thus, the crimp connection may be continuously guided through the heating region as part of a pivoting motion. This is advantageous when the fully automatic wire processing machine grips the stamped and bent contact and the electrical conductor strand with a robotic arm whose arm length corresponds to the radius of the segment of a circle and whose pivot axis is located at the vertex of the segment of a circle. During the pivoting motion, the crimp connection gripped at the end of the robotic arm precisely follows the path of the heating region without leaving it.

Alternatively, the legs may also run in a straight line to allow for a straight heating region. This embodiment is suitable when the fully automatic wire processing machine uses a conveyor chain or a feed belt.

The invention is described in more detail below with reference to the drawings. The combinations of features shown as examples may be supplemented by further features in accordance with the above descriptions, depending on the properties required for a specific application of the device according to the invention and the fully automatic wire processing machine according to the invention. Likewise, in accordance with the above descriptions, individual features may be omitted from the described embodiments if the effect of these features is not essential in a specific application. In the drawings, the same reference numerals are always used for elements having the same function and/or the same structure.

In the drawings:
Fig. 1 is a schematic perspective view of a device according to an exemplary embodiment;
Fig. 2 is a further schematic perspective view of the device from Fig. 1;
Fig. 3 is a detailed view of the device from Fig. 1;
Fig. 4 is a schematic perspective view of the device according to a further exemplary embodiment;
Fig. 5 is a schematic view of a fully automatic wire processing machine with the device of Fig. 4;
Fig. 6 is a schematic perspective view of the device according to a further exemplary embodiment;
Fig. 7 is a schematic sectional view of the device according to a further exemplary embodiment;
Fig. 8 is a schematic sectional view of the device according to a further exemplary embodiment;
Fig. 9 is a schematic view of a method according to an exemplary embodiment;
Fig. 10 is a schematic sectional view of the device according to a further exemplary embodiment; and
Fig. 11 is a schematic sectional view of the device according to a further exemplary embodiment.

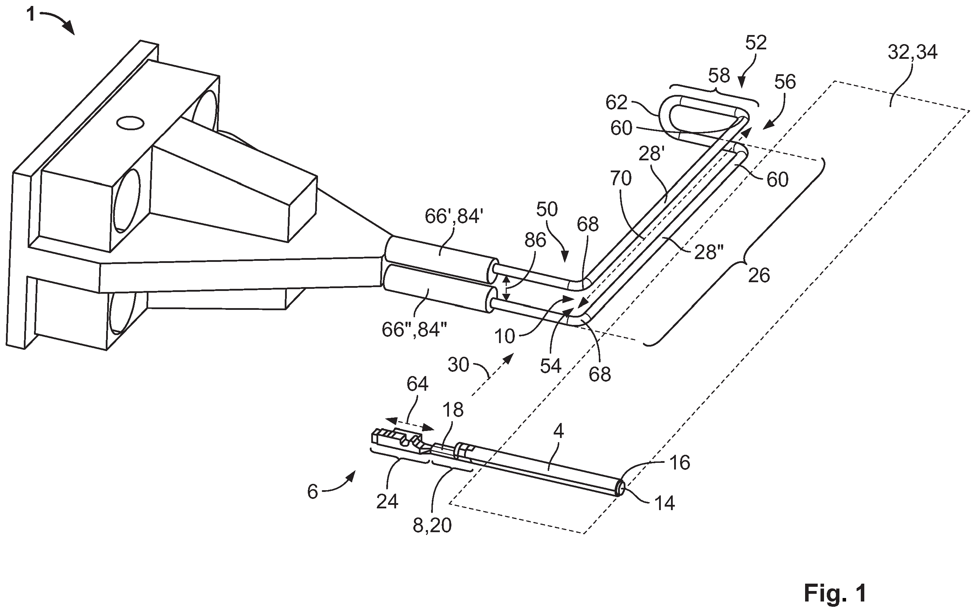

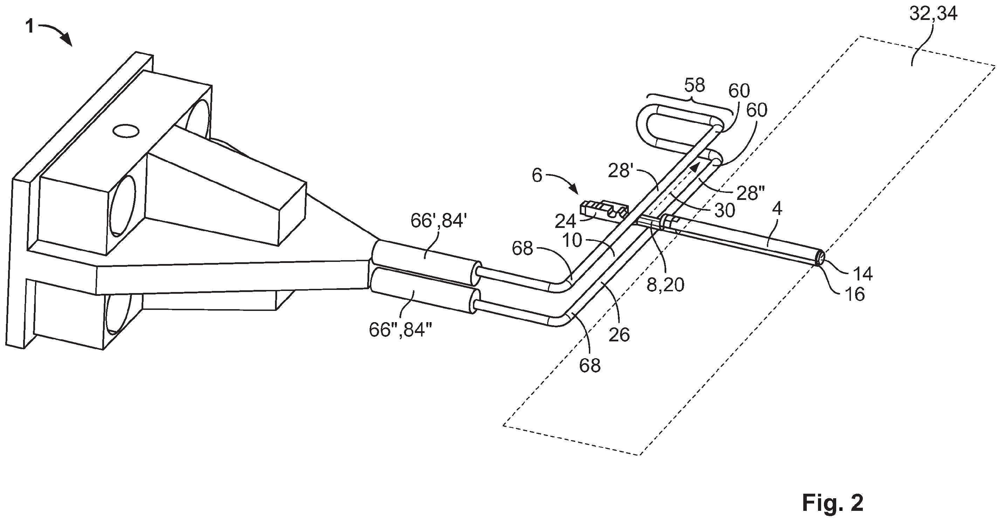

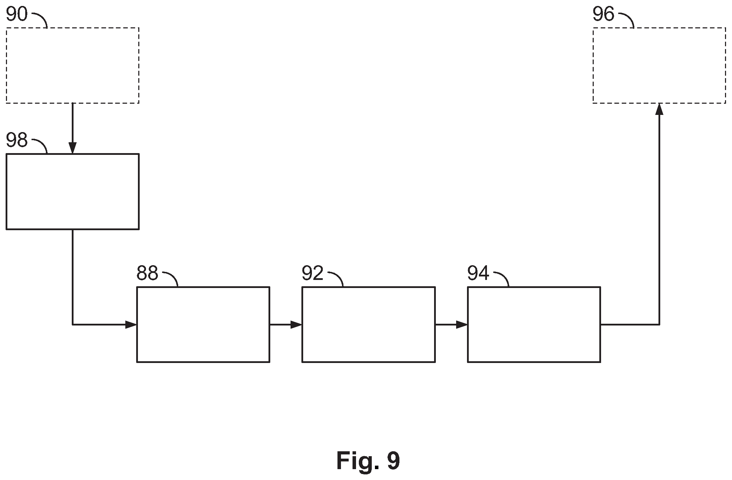

In the following exemplary embodiments of the device 1 of the invention and the fully automatic wire processing machine 2 of the invention are explained with reference to Figures 1 through 11. Furthermore, the method of the invention is described with reference to Figure 9.

The device 1 may be used in assembling an electrical conductor strand 4 with a stamped and bent contact 6. As will be explained in more detail below, the device 1 serves to solidify a crimp connection 8 between the stamped and bent contact 6 and the electrical conductor strand 4. In particular, the device 1 includes a heating region 10, with which the solidification is performed.

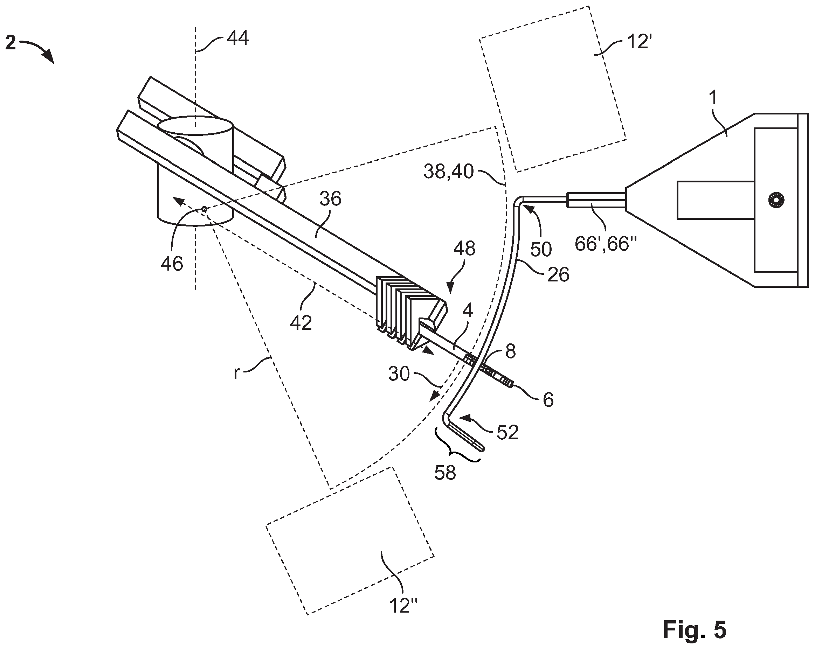

The crimp connection 8 may be produced outside the heating region 10, specifically outside the device 1, in a first processing station 12' (see Fig. 5) of the fully automatic wire processing machine 2. After solidification in the device 1, the stamped and bent contact 6 and/or the electrical conductor strand 4 may be reworked in a second processing station 12" of the fully automatic wire processing machine 2.

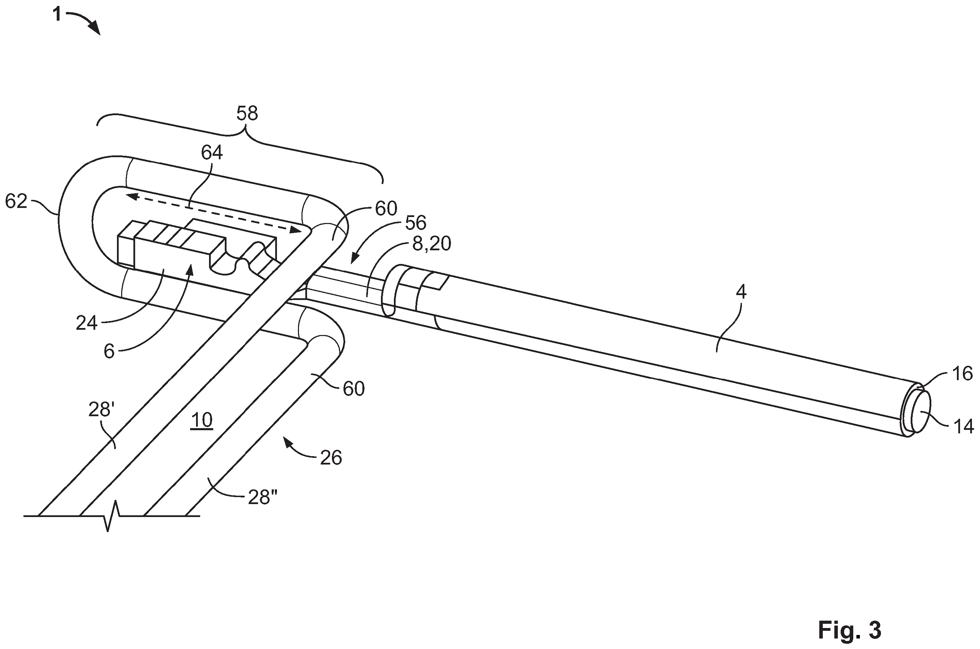

As shown in Fig. 1, the electrical conductor strand 4 may be a stranded wire 14 or a cable conductor core. Optionally, the electrical conductor strand 4 may have an insulating sheath 16 that encloses the stranded wire 14 or the cable conductor core (see Fig. 3).

The stamped and bent contact 6 is pre-tinned for aesthetic enhancement. Alternatively or additionally, the electrical conductor strand 4 is pre-tinned. In particular, the stamped and bent contact 6 and/or the electrical conductor strand 4 is provided with a re-meltable tin coating 18 prior to forming the crimp connection 8. The tin coating 18 also serves as a lubricant that protects the crimping tool (not shown) of the first processing station 12'. In addition, the tin coating 18 protects against corrosion.

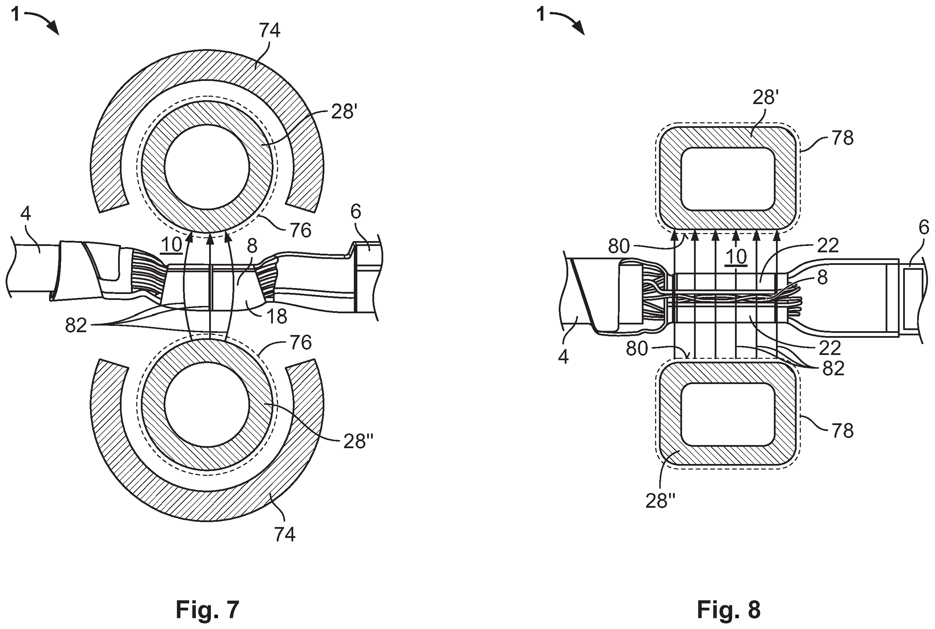

The stamped and bent contact 6 may include a crimp section 20. This crimp section 20 may have at least two crimp flanks 22 (see Fig. 8) that are plastically deformed in the first processing station 12' of the fully automatic wire processing machine 2. In particular, as a result of the plastic deformation, the crimp flanks 22 may squeeze the electrical conductor strand 4 and, if necessary, be cold-welded to it. This results in the crimp connection 8.

In addition to the crimp section 20, the stamped and bent contact 6 may include a contact section 24. This contact section 24 is located opposite the electrical conductor strand 4 with respect to the crimp connection 8. In other words, the contact section 24 may extend away from the electrical conductor strand 4 at the crimp section 20. For example, the contact section 24 may undergo a post-processing step in the second processing station 12".

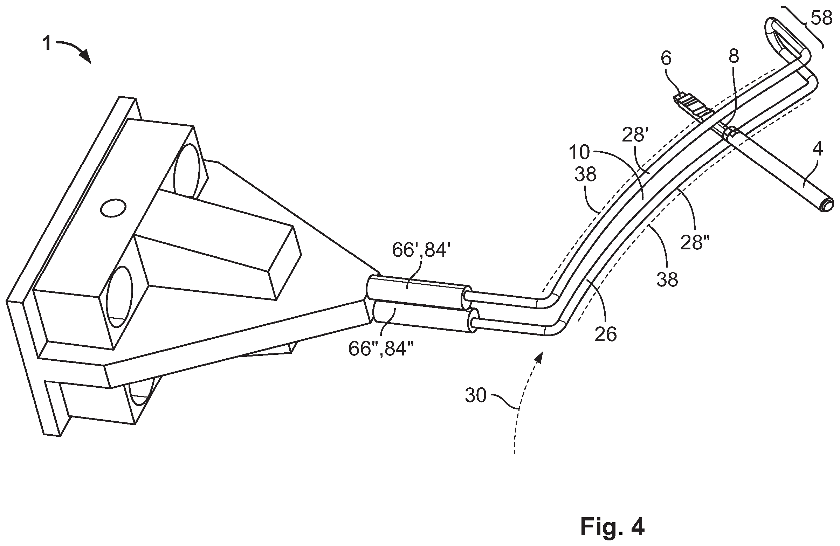

As shown in Fig. 5, the device 1 may be arranged between the processing stations 12', 12" in the fully automatic wire processing machine 2. This allows the solidification of the crimp connection 8 as part of a transfer movement between the first and second processing stations 12', 12". An interruption of the transfer movement or a stop in the heating region 10 is not necessary here, resulting in time savings. Depending on the relative arrangement of processing stations 12', 12", the heating region 10 may be straight (see Fig. 1) or curved (see Fig. 4).

The device 1 includes an induction loop 26 that delimits the heating region 10 of the device 1 at least in sections or partially. For this purpose, the induction loop 26 may include a first leg 28' and a second leg 28" that is opposite the first leg 28' with respect to the heating region 10. As already mentioned, the crimp connection 8 may be moved through the heating region 10 and consequently between the legs 28' and 28". This transfer movement of the crimp connection 8 is indicated in Figs. 1 and 5 by an arrow 30.

For example, the transfer movement along the straight heating region 10 may be implemented by using a conveyor chain 32 or a feed belt 34 (see Fig. 1). **In** this case, the legs 28', 28" of the induction loop 26 may extend in a straight manner. In particular, the central axes of the legs 28', 28" extend in a straight line and parallel to one another.

Alternatively, a robot arm 36 of the fully automatic wire processing machine 2 may perform the transfer movement as a pivoting motion (see Fig. 5). In this case, the curved heating region 10 is suitable.

In the curved heating region 10 shown in Fig. 4, the first leg 28' and the second leg 28" each have a curvature 38. **In** particular, the legs 28', 28" may have identically shaped curvatures 38 and run symmetrically to one another. For example, the identically shaped curves 38 of the legs 28', 28" may each represent a segment of a circle or arc 40 (see Fig. 5).

Thus, the crimp connection 8 may be continuously guided through the heating region 10 as part of the pivoting movement. If the robot arm 36 has an arm length 42 corresponding to the radius r of the segment of a circle 40 and a pivot axis 44 of the robot arm 36 is located at the vertex 46 of the segment of a circle 40, the crimp connection 8, gripped at one end 48 of the robot arm 36, follows the path of the heating region 10 exactly without leaving it.

As can be seen in Fig. 1, the heating region 10 may extend from an entry point 50 to an exit point 52. The entry point 50 may be defined by a slit-shaped entry opening 54 of the induction loop 26. Accordingly, the exit point 52 may be defined by a slit-shaped exit opening 56 of the induction loop 26. To enable the crimp connection 8 to be moved along a straight path through the heating region 10, the entry opening 54 and exit opening 56 are optionally arranged at the same height. Optionally, a funnel (not shown) may be provided at the inlet opening 54, which forms insertion ramps leading into the heating region 10.

In the heating region 10, the crimp connection 8 is heated inductively. **In** the process, the tin coating 18 is partially melted or melted down, at least locally in the area of the crimp connection 8. At the aforementioned crimp flanks 22 of the crimp section 20, the respective tin coatings 18 lie directly against one another, so that they may fuse directly with one another as a result of the inductive heating. Furthermore, the tin coating 18 may redistribute itself at the crimp connection 8. In particular, the melted tin coating 18 may enter fine gaps and crevices that were not previously involved in the flow of force and/or current.

After leaving the heating region 10, the crimp connection 8 cools back down to ambient temperature, causing the tin coating 18 to harden and contribute to the mechanical and electrical reliability of the crimp connection 8. In other words, the re-meltable tin coating 18 is utilized in the device 1 for the brazing or soldering of the crimp connection 8.

To generate the strongest possible overall field in the heating region 10 for inductive heating, the first leg 28' and the second leg 28" are electrically connected in series. That is, the legs 28', 28" are arranged in a common current path, so that an (alternating) current flows through the two legs 28', 28" in series. Consequently, in the heating region 10, the magnetic field lines of the electromagnetic field generated around the legs 28', 28" constructively overlap when current flows through the legs 28', 28" surrounding the heating region 10 on both sides.

The series connection of the legs 28', 28" is enabled, for example, by a deflection piece 58 of the induction loop 26. The deflection piece 58 may connect one end 60 of the first leg 28' to one end 60 of the second leg 28". Furthermore, the deflection piece 58 may extend transversely, in particular perpendicular to the first and second legs 28', 28". As shown in Fig. 1, the deflection piece 58 may be bent out of a common plane of the first and second legs 28', 28".

To avoid obstructing the heating region 10, the deflection piece 58 may be U-shaped, wherein a apex 62 of the U-shape is farther away from the two legs 28', 28" than a length 64 of the aforementioned contact section 24. Thus, the deflection piece 58 does not obstruct the movement of the stamped and bent contact 6, provided that its crimp section 20 is located between the legs 28', 28" (see Fig. 3).

For power supply, the induction loop 26 may include a first power connection or terminal 66' and a second power connection 66". The power connections 66', 66" may also extend transversely, in particular perpendicularly to the first and second legs 28', 28". Accordingly, the power connections 66', 66" may also be bent out of the common plane of the first and second legs 28', 28" (see Fig. 1).

The first power connection 66' and the second power connection 66" may be opposite one another with respect to the heating region 10. Furthermore, the first power connection 66' may be arranged at an end 68 of the first leg 28' not connected by the deflection piece 58, and the second power connection 66" be arranged at an end 68 of the second leg 28" not connected by the deflection piece 58.

The arrangement of the power connections 66', 66" at the ends 68 of the legs 28' , 28" results in the magnetic field being able to develop along the entire length 70 of both legs 28', 28". Furthermore, the induction loop 26 may be manufactured with fewer bends, since only one deflection piece 58 is required at the non-connected, opposite ends 60 of the legs 28', 28".

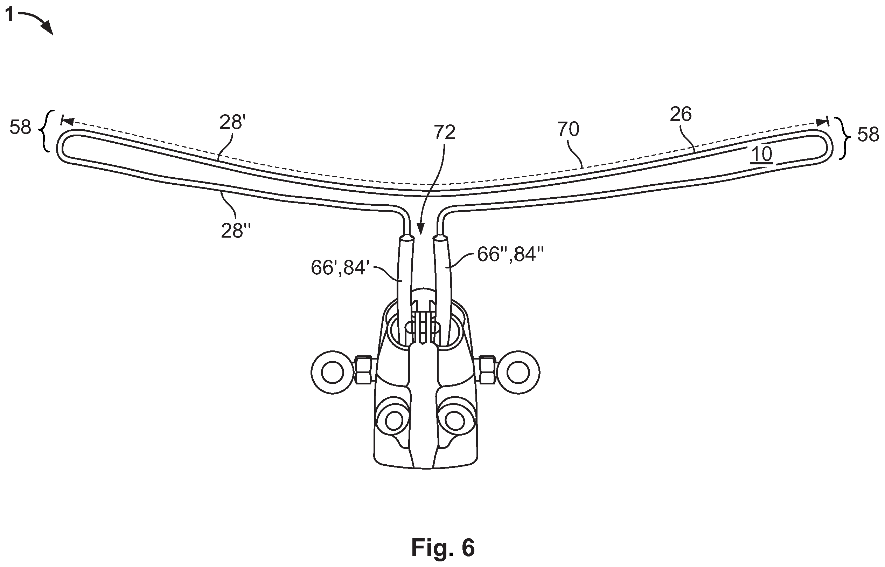

As shown in the alternative embodiment of Fig. 6, the power connections 66', 66" may be located on the same side of the heating region 10. This configuration features a more uniform weight distribution and is particularly suitable for legs 28' , 28" having a particularly large length 70. In this case, however, one of the legs 28', 28" has an interruption 72 between the power connections 66', 66". Furthermore, the induction loop 26 requires two deflection pieces 58 in this embodiment.

The intensity of the inductive heating may further be influenced by configuring the device 1 so as to generate a magnetically and/or temporally varying magnetic field in the heating region 10. Based on the frequency of the alternating magnetic field, the energy input required for inductive heating may be precisely adjusted. In particular, the energy input may be precisely adapted to a transit time or dwell time available during the transfer movement between the processing stations 12', 12" of the fully automatic wire processing machine 2.

The magnetic field generated by the legs 28', 28" may be specifically manipulated if the device 1 includes at least one ferrite element 74 that surrounds the first leg 28' and/or the second leg 28" at least in sections. For example, the at least one ferrite element 74 may extend, at least in sections, between the entry point 50 and the exit point 52. The at least one ferrite element 74 allows the magnetic field to be focused on the heating region 10. Optionally, each leg 28', 28" may have its own ferrite element 74 (see Fig. 7).

As further shown in Fig. 7, the first leg 28' and the second leg 28" may each have a circular cross-section 76. In other words, a shape extending in the longitudinal direction of the respective legs 28', 28" may be cylindrical. Alternatively, the first leg 28' and the second leg 28" may each have a substantially rectangular cross-section 78 (see Fig. 8). Along the longitudinal direction, the legs 28', 28" then have a cuboid shape. At the flat sides 80 of the respective cuboid shape facing the heating region 10, the field lines 82 emerge approximately parallel to one another. Consequently, the legs 28', 28" may be aligned such that the field lines 82 enter the heating region 10 perpendicular to the direction of movement of the crimp connection 8. The orthogonality thus achieved between the field lines 82 and the direction of movement of the crimp connection 8 increases the efficiency of the inductive heating.

As can be seen in Figs. 7 and 8, the legs 28', 28" may be hollow to allow a coolant to circulate therein. The electrical connections 66', 66" may then also each form coolant connections 84', 84", so that the induction loop 26 may be fluid-cooled.

Optionally, a distance 86 between the first leg 28' and the second leg 28" may be adjustable. For example, the distance 86 may be continuously adjustable, so that the size of the heating region 10 may be adapted to a dimension of the crimp connection 8. Thus, the device 1 may be used with crimp connections of different configurations. The deflection piece 58 may have then to be configured to be correspondingly flexible.

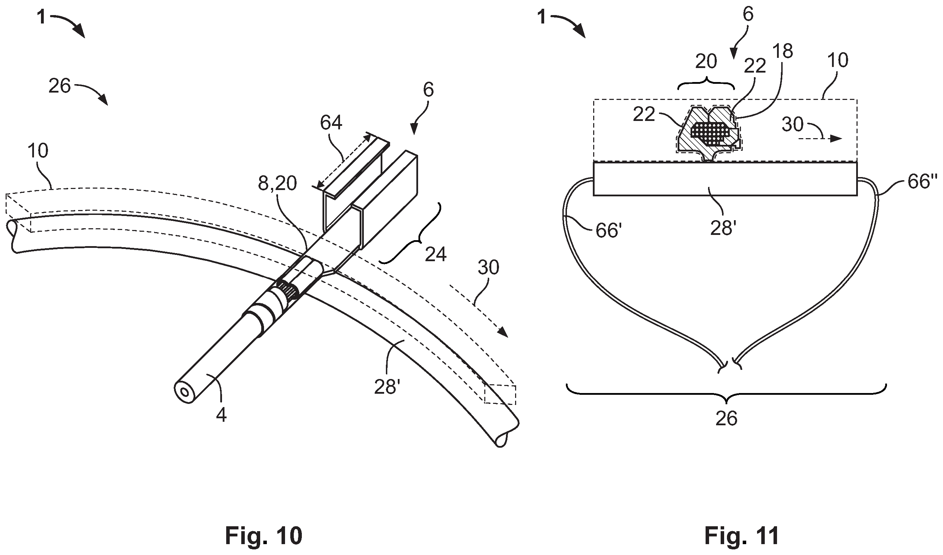

Fig. 10 illustrates another exemplary embodiment of the device 1, in which the induction loop 26 has only one leg (e.g., the first leg 28'). The first leg 28' extends along the heating region 10 and thus delimits it on one side. When the crimp connection 8 is guided through the heating region 10 following the first leg 28' and current flows through the induction loop 26, the crimp connection 8 may be inductively heated under the influence of the electromagnetic field generated around the first leg 28'. Consequently, neither an entry opening 54 nor an exit opening 56 is required, through which the crimp connection 8 has to be moved. In particular, contact sections 24 of any length 64 may be moved unimpeded through the heating region 10, since no deflection points 58 toward a second leg obstruct the path of movement.

Fig. 11 shows another exemplary embodiment of the device 1 together with a cross-section of the crimp connection 8. Here, the electrical connections 66', 66" are both arranged on the first leg 28', with the heating region 10 located outside the induction loop 26. Consequently, the induction loop 26 does not surround the heating region 10, but rather delimits it laterally.

Fig. 9 shows a schematic flowchart of the method according to the invention for solidifying the crimp connection 8 between the stamped and bent contact 6 and the electrical conductor strand 4. The method first includes step 88 of moving the crimp connection 8 through the device 1 according to the invention. As previously explained, this may be accomplished by means of the conveyor chain 32, the feed belt 34, or the robotic arm 36. The crimp connection 8 arrives from the first processing station 12' of the fully automatic wire processing machine 2, where the crimp connection 8 was produced in a preceding step 90.

This is followed by step 92 of heating the crimp connection 8 in the heating region 10 of the device 1. This step 92 may occur while the crimp connection 8 is being moved through the heating region 10. In this process, the crimp connection 8 may be heated inductively to a temperature, at which the re-meltable tin coating 18 of the crimp connection 8 melts or at least begins to melt.

Finally, in step 94, the crimp connection 8 is cooled down outside the heating region 10 before the stamped and bent contact 6 and/or the electrical conductor strand 4 are subjected to a post-processing step 96 in the second processing station 12" of the fully automatic wire processing machine 2. After cooling, the tin coating hardens and increases the strength of the crimp connection. The cooling (i.e., step 94) may also take place during the post-processing step 96.

If the amount of tin contained in the tin coating 18 to be melted is insufficient to solidify the crimp connection 8, an intermediate step 98 may be performed before or during step 88 of passing through, in which additional solder is applied to the crimp connection 8. The additional solder provides improved hold after the crimp connection 8 has cooled down and hardened. Optionally, flux may also be applied to the crimp connection 8 in intermediate step 98 to aid the flow of the melted tin into the aforementioned fine gaps and crevices. Before, after, or during intermediate step 98, additional auxiliary soldering agents (e.g., surface cleaners, soldering oils, soldering greases, soldering varnishes) may also be applied to and around the crimp connection 8.

Preferably, the duration required for step 92 may correspond to the time that the fully automatic wire processing machine 2 would require for the transfer between processing stations 12', 12" if no device 1 were arranged between processing stations 12', 12". In other words, step 92 is performed on-the-fly, so that the process time of the fully automatic wire processing machine 2 is not slowed down, or only insignificantly so. To achieve this, the frequency of the alternating magnetic field may be adjusted such that the energy input occurring during the transfer movement between processing stations 12', 12" is sufficient for solidification.

### Reference Numerals

- 1: Device
- 2: Fully automatic wire processing machine
- 4: Conductor strand
- 6: Stamped and bent contact
- 8: Crimp connection
- 10: Heating region
- 12', 12': Processing station
- 14: Wire strand
- 16: Insulation sheath
- 18: Tin coating
- 20: Crimp section
- 22: Crimp flank
- 24: Contact section
- 26: Induction loop
- 28', 28": Leg
- 30: Arrow
- 32: Conveyor chain
- 34: Feed belt
- 36: Robot arm
- 38: Curvature
- 40: Segment of a circle or arc
- 42: Arm length
- 44: Pivot axis
- 46: Vertex
- 48: End
- 50: Entry point
- 52: Exit point
- 54: Entry opening
- 56: Exit opening
- 58: Deflection piece
- 60: End
- 62: Apex
- 64: Length
- 66', 66": Power connection or connection of power supply
- 68: End
- 70: Length
- 72: Interruption
- 74: Ferrite element
- 76: Cross-section
- 78: Cross-section
- 80: Flat side
- 82: Field line
- 84', 84": Coolant connection
- 86: Distance
- 88: Step
- 90: Step
- 92: Step
- 94: Step
- 96: Post-processing step
- 98: Intermediate step
- R: Radius

## Claims

1. Device (1) for solidifying a crimp connection (8) between a stamped and bent contact (6) and an electrical conductor strand (4), one or both of which are tin-plated, wherein the device (1) comprises a heating region (10) and an induction loop (26) delimiting the heating region (10) at least in sections, wherein the induction loop (26) comprises at least a first leg (28') that extends along the heating region (10).

2. Device (1) according to claim 1, wherein the device (1) is configured to generate a spatially and/or temporally varying magnetic field in the heating region (10).

3. Device (1) according to claim 1 or 2, wherein the induction loop (26) comprises a first power connection (66') and a second power connection (66"), wherein the first power connection (66') and the second power connection (66") are opposite one another with respect to the heating region (10).

4. Device (1) according to any one of claims 1 to 3, wherein the induction loop (26) comprises a second leg (28") opposite the first leg (28') with respect to the heating region (10), and wherein the first leg (28') and the second leg (28") are electrically connected in series.

5. Device (1) according to claim 4, wherein the device (1) comprises at least one ferrite element (74) that surrounds the first leg (28') and/or second leg (28") at least in sections.

6. Device (1) according to claim 4 or 5, wherein the first leg (28') and the second leg (28") of the induction loop (26) each have a round or rectangular cross-section (76, 78).

7. Device (1) according to any one of claims 4 to 6, wherein a distance (86) between the first leg (28') and the second leg (28") is configured to be variable.

8. Device (1) according to any one of claims 4 to 7, wherein the induction loop (26) comprises a deflection piece (58) that connects one end (60) of the first leg (28') to one end (60) of the second leg (28"), wherein the deflection piece (58) extends transversely to the first and second legs (28', 28").

9. Device (1) according to claim 8 in combination with claim 3, wherein the first power connection (66') is arranged at an end (68) of the first leg (28') not connected by the deflection piece (58), and the second power connection (66") is arranged at an end (68) of the second leg (28") not connected by the deflection piece (58).

10. Device (1) according to any one of claims 4 to 9, wherein the heating region (10) extends from an entry opening (54) in the induction loop (26) to an exit opening (56) in the induction loop (26), and wherein the entry opening (54) and the exit opening (56) are arranged at the same height.

11. Device (1) according to any one of claims 4 to 10, wherein the first leg (28') and the second leg (28") each have a curvature (38).

12. Fully automatic wire processing machine (2) comprising a device (1) according to any one of claims 1 to 11, a first processing station (12') for producing a crimp connection (8) between a stamped and bent contact (6) and an electrical conductor strand (4), one or both of which are tin-plated, and a second processing station (12") for post-processing the stamped and bent contact (6) and/or the electrical conductor strand (4), wherein the device (1) is arranged between the first processing station (12') and the second processing station (12").

13. Fully automatic wire processing machine (2) according to claim 12, wherein the fully automatic wire processing machine (2) is configured to process a stamped and bent contact (6) having at least two crimp flanks (22), and wherein the first processing station (12') is configured to bring the at least two crimp flanks (22) into mutual contact.

14. Method for solidifying a crimp connection (8) between a stamped and bent contact (6) and an electrical conductor strand (4), one or both of which are tin-plated, wherein the method comprises the steps of:
- passing the crimp connection (8) through a device (1) according to any one of claims 1 to 11;
- heating the crimp connection (8) in the heating region (10) of the device (1); and
- cooling down the crimp connection (8) outside the heating region (10).

15. Method according to claim 14, wherein additional solder and/or flux is applied to the crimp connection (8) before or during the passing through of the crimp connection (8).
